# EUROPÄISCHE PATENTANMELDUNG

(11) **EP 0 994 273 A2**
(43) Veröffentlichungstag der Anmeldung: **19.04.2000**
(21) Anmeldenummer: 99116847.7
(22) Anmeldetag: 03.09.1999
(51) Int. Cl.: F16F 15/26

(54) **Ausgleichswelleneinheit für Verbrennungsmotoren**

(30) Priorität: 15.10.1998 DE 19847652
(71) Anmelder: Volkswagen Aktiengesellschaft, 38436 Wolfsburg (DE)
(72) Erfinder: Voigt, Dieter, Dipl.-Ing., 38110 Braunschweig (DE)

(57) **Zusammenfassung**

Die Erfindung betrifft eine Ausgleichswelleneinheit für Verbrennungsmotoren mit einer oder einem Paar gegenläufiger Ausgleichswellen (1) mit freier Oberfläche der umlaufenden exzentrischen Querschnitte, die in einem, in den Ölspiegel (10) der Ölwanne (19) ganz oder teilweise eintauchenden Gehäuse (12) gelagert sind.
Erfindungsgemäß wird an der Ausgleichswelleneinheit eine Förderanordnung zum Entfernen von in das Gehäuse eingedrungenem Öl von am Halbumfang der Ausgleichswelle (1) bzw. Ausgleichswellen angeordneten, spiralförmigen Abstreifleisten (13) gebildet.

## Beschreibung

Die Erfindung betrifft eine Ausgleichswelleneinheit für Verbrennungsmotoren mit den im Oberbegriff des Hauptanspruches genannten Merkmalen.

Vorbekannt ist durch die Schrift US - PS 4.703.725 eine gattungsgemäße Ausgleichswellenanordnung, bei der beide Ausgleichswellen in einem umschließenden Gehäuse angeordnet sind.

Der Antrieb der beiden entgegengesetzt umlaufenden Ausgleichswellen erfolgt synchron von der Kurbelwelle und untereinander mittels der Zahnräder einer Zahnradpumpe, die als Schmierölförderpumpe im Motor eingesetzt ist. Der Innenraum des die Ausgleichswellen aufnehmenden Gehäuses ist an den Saugraum der Ölförderpumpe angeschlossen, so daß ein Absaugen von Öl aus dem Gehäuse durch deren anliegendem Saugdruck erfolgt.

Vorbekannt ist weiterhin durch die Schrift EP 0789 166 A1 eine Anordnung, bei der zwei entgegengesetzt umlaufende, parallel nebeneinander angeordnete Ausgleichswellen ein Hohlrohr als Mantel und damit eine glatte Oberfläche mit geringen Ventilationsverlusten aufweisen. Über die Hohlrohre erfolgt der Antrieb der Ausgleichswellen. Sie sind untereinander mit zueinander im Eingriff stehenden Zahnrädern ausgestattet. In die Hohlrohre der Ausgleichswellen eingedrungenes Öl wird über radiale Öffnungen in den Hohlrohren in das Kurbelgehäuse bzw. die Ölwanne geschleudert.
Vorbekannt ist ferner eine Ausgleichswellenanordnung, bei der zum Vermeiden von Ölverschäumung die Ausgleichswelle in einem gesonderten, von unten am Kurbelgehäuse befestigten Gehäuse über dem Ölspiegel gelagert ist. Der Antrieb erfolgt mittels einer Kette direkt vom freien Kurbelwellenende (DE-Z, MTZ, Motortechnische Zeitschrift 58 (1997)5, S. 268 und 269).

Der Erfindung liegt die Aufgabe zugrunde, bei einer gattungsgemäßen, Ausgleichswelleneinheit eine einfache Ölförderanordnung im Gehäuse der Ausgleichswellen zum Entfernen von eingedrungenem Öl zu schaffen.
Die Lösung dieser Aufgabe gelingt mit den Merkmalen des Patentanspruches 1.

Die Lösung schafft eine Ausgleichswellenanordung, die einen Pumpeffekt zum Entfernen von in den Umlaufraum der Ausgleichswellen eingedrungenem Öl erzielt. Damit werden Panschverluste und Ölaufschäumung im Umlaufraum der Ausgleichswellen vermieden. Das Gehäuse kann dabei in den Ölspiegel der Ölwanne hineinreichen.

Vorteilhafte Ausgestaltungen der Erfindung sind in den abhängigen Ansprüchen angegeben.

Weitere Vorteile und Merkmale der Erfindung ergeben sich aus dem nachfolgenden Ausführungsbeispiel, welches anhand einer Zeichnung näher erläutert wird.

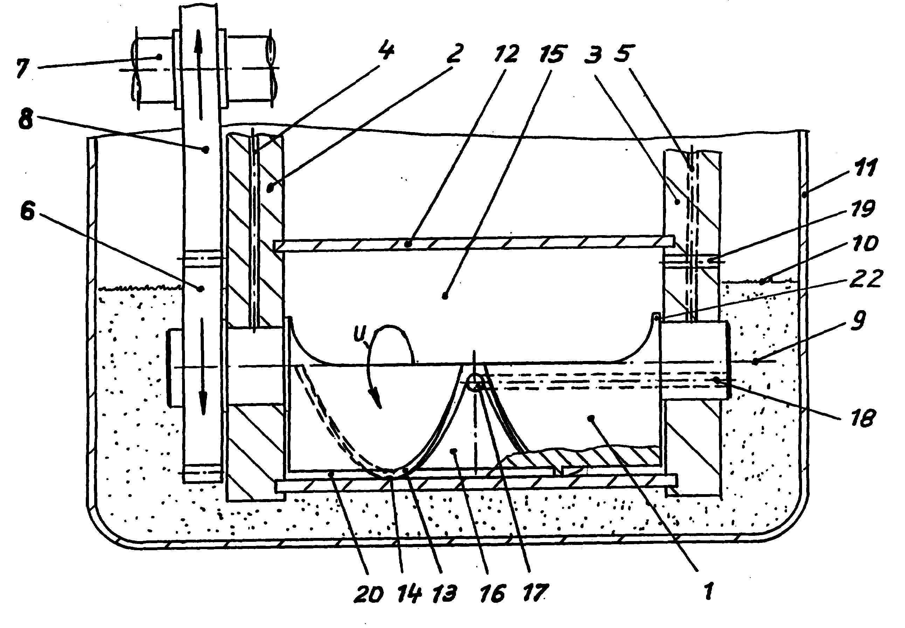

In der Zeichnung ist eine gattungsgemäße Ausgleichswelleneinheit dargestellt. Die Ausgleichswelle 1 ist von einem rohrförmigen Gehäuse 12 umgeben, welches über Lagerstege 2, 3 gehalten wird. Die Lagerstege 2, 3 mit den Ölversorgungabohrungen 4, 5 sind an den nicht gezeigten Lagerbrücken des Kurbelbetriebs befestigt. Der Antrieb der Ausgleichswelle 1 erfolgt über ein Zahnrad 6, welches mit einem Zahnrad 8 auf einer Kurbelwelle 7 im Eingriff steht. Die Ausgleichswellenachse 9 verläuft unterhalb des Ölspiegels 10 in einer Ölwanne 11.

Die Ausgleichswelle 1 ist an ihrem Halbumfang mit spiralförmig verlaufenden Abstreifleisten 13 versehen. Zwischen Kopfkreis der Abstreifleisten 13 und Innendurchmesser des rohrförmigen Gehäuses 12 besteht ein geringer Spalt 14. Über die Lagerstellen sowohl im Betriebszustand als auch bei Motorstillstand in den Innenraum 15 des rohrförmigen Gehäuses 12 eingedrungenes Öl wird mittels der Abstreifleisten 13 beim Umlauf U von der Innenwand gelöst und in einen zwischen den Abstreifleisten 13 und der Innenwand gebildeten, in Drehrichtung mit der offenen Seite voran umlaufenden, pfeilförmigen Förderraum 16 gedrängt Dieser steht über eine Radialbohrung 17 und eine Axialbohrung 18 in der Ausgleichswelle 1 mit der Ölwanne 11 in Verbindung.
Für den erforderlichen Druckausgleich im Gehäuse 12 ist ein oberhalb des Ölspiegels 10 mündender Entlüftungskanal 19 im Lagersteg 3 vorgesehen.
Die Wirksamkeit der Ölförderung aus dem rohrförmigen Gehäuse 12 und die Minimierung von Leistungsverlusten hängt unter anderem von der Optimierung des Radialspiels bzw. des Spaltes 14 zwischen den Abstreifleisten 13 und dem rohrförmigen Gehäuse 12 sowie vom Spalt 20 zwischen rohrförmigem Gehäuse 12 und Ausgleichswelle 1 ab.

Eine weitere, nicht dargestellte und im Rahmen der Erfindung liegende Ausführung weist mehrere Radialbohrungen 17 und eine dementsprechende Anzahl an ölfangenden Abstreifleisten 13 bzw. gewindeartigen Konturen auf

Hierbei ist der in der Zeichnung erkennbare und jeweils links und rechts der Ausgleichswelle 1 liegende Bund 22 in axialer Richtung verbreitert ausgeführt und auf jedem Bund 22 ist eine pfeilförmig in eine Radialbohrung 17 einlaufende Spiralleiste 13 angeordnet. Der zwischen den beiden Bünden 22 liegende axiale Abschnitt der Ausgleichswelle 1 ist insofern frei von einer Ölfördereinrichtung. Dieser Ausführungsform liegt der Gedanke zugrunde, daß der wesentliche Öleintritt in den Innenraum 15 über die Ölversorgungsbohrungen 4,5 sowie die entsprechenden Lagerstellen der Ausgleichswelle 1 erfolgt und daher eine unmittelbar an diesen Öleintrittsstellen angeordnete Förderanordnung besonders wirksam ist.

Alternativ zu den zuvor beschriebenen Ausführungsformen kann die Abstreifleiste 13 auch auf der Innenkontur des Gehäuses 12 ruhend angeordnet sein. Vorzugsweise ist hierbei einer Abstreifleiste 13 schneckenförmig auf der Innenkontur ausgebildet, wobei eine im sich pfeilförmig verengenden Förderraum 16 angeordnete Ölaustrittsbohrung vorzugsweise oben im Gehäuse 12 angeordnet ist.

Durch die erfindungsgemäße Förderanordnung ist die Ausgleichswellenanordnung problemlos derartig in der Ölwanne anzuordnen, daß sie teilweise oder vollständig in deren Ölspiegel eintaucht. Somit kann der vorhandene Bauraum in einer Ölwanne vollständig auch für zwei gegenläufig rotierende und vertikal übereinander angeordnete Ausgleichswellen genutzt werden, so daß ein Moment zweiter Ordnung auftritt, wodurch ein Teil der gasdruckbedingten Motorschwingungen um die Kurbelwellenachse kompensiert werden kann.
Je nach Einbausituation und Eintauchtiefe des Gehäuses 12 in den Ölspiegel kann hierbei eine einzige, der dann untenliegenden Ausgleichswelle zugeordnete Förderanordnung ausreichend sein.

Im Falle von zwei vertikal übereinander angeordneten Ausgleichswellen umgibt das gemeinsame Gehäuse 12 diese mit einer Einschnürung im Bereich etwa mittig zwischen den beiden Ausgleichswellen. Die dann untenliegende Ausgleichswelle ist mindestens über 180° von dem gemeinsamen Gehäuse umfaßt. Im Bereich der oben liegenden Ausgleichswelle eingedrungenes Öl kann so innerhalb des Gehäuses zu der unteren Ausgleichswelle gelangen, welcher eine Förderanordnung zugeordnet ist. Eine Austrittsöffnung ist dann beispielsweise gemäß der Zeichnung an einem axialen Ende dieser Ausgleichswelle vorgesehen oder radial in einem seitlich liegenden Bereich des Gehäuses 12.

Für eine verbesserte Öldichtigkeit und vereinfachte Montage kann bevorzugt vorgesehen sein, daß das Gehäuse 12 an einem seiner axial liegenden Ende einstückig und materialeinheitlich beispielsweise mit dem in der Zeichnung rechts liegenden Lagersteg 3 ausgebildet ist. In eine Lagerstelle dieses Lagersteges 3 kann dann die eine oder können die beiden Ausgleichswellen gemäß Zeichnungsfigur von links ausgehend eingesteckt werden, das linksliegende, offene Ende des Gehäuses 12 kann dann durch einen in den dortigen Lagersteg 2 einzusteckenden Lagerdeckel verschlossen werden.

In weiterer vorteilhafter Ausgestaltung kann der Ausgleichswelleneinheit eine integral ausgebildete Ölpumpe zugeordnet sein, welche beispielsweise im Falle von zwei Ausgleichswellen im Lagersteg 2 durch eine entsprechende Gestaltung der dortigen Lagerzapfen der Ausgleichswellen gebildet sein kann. Der Antrieb dieser Ölpumpe erfolgt somit über den Antrieb der Ausgleichswellen.

## Patentansprüche

1. Ausgleichswelleneinheit für Verbrennungsmotoren mit synchron von der Kurbelwelle angetriebener Ausgleichswelle, wobei
- eine oder ein Paar gegenläufige Ausgleichswellen mit freier Oberfläche der umlaufenden exzentrischen Querschnitte in einem Gehäuse im Bereich der Ölwanne gelagert sind, und
- im Umlaufraum der Ausgleichswelle oder der Ausgleichswellen im Gehäuse eine Förderanordnung zum Entfernen von eingedrungenem Öl vorhanden ist,
**dadurch gekennzeichnet,**
daß in einem zwischen Gehäuse (12) und der Ausgleichswelle (1) bzw. Ausgleichswellen ausgebildeten Spalt (20) die Förderanordnung durch zumindest eine spiralförmig verlaufend angeordnete Abstreifleiste (13) gebildet ist, wobei
ein zwischen den Abstreifleisten (13) und dem Gehäuse (12) gebildeter Förderraum (16) über eine Kanalanordnung (17, 18) in der jeweiligen Ausgleichswelle (1) mit der Ölwanne (11) verbunden ist.

2. Ausgleichswelleneinheit nach Anspruch 1,
**dadurch gekennzeichnet,**
daß der Förderraum (16) pfeilförmig zwischen zwei gegenläufig im Spalt (20) angeordneten Abstreifleisten (13) ausgebildet ist.

3. Ausgleichswelleneinheit nach Anspruch 1,
**dadurch gekennzeichnet,**
daß im Bereich der engsten Stelle des Förderraumes (16) eine Radialbohrung (17) der Kanalordnung (17, 18) angeordnet ist.

4. Ausgleichswelleneinheit nach einem oder mehreren der vorhergehenden Ansprüche,
**dadurch gekennzeichnet,**
daß sich die Abstreifleiste (13) über einen Halbumfang der Ausgleichswelle (1) erstreckt.

5. Ausgleichswelleneinheit nach einem oder mehreren der vorhergehenden Ansprüche 1 bis 3,
**dadurch gekennzeichnet,**
daß sich die Abstreifleiste (13) auf der Innenkontur des Gehäuses (12) erstreckt.

6. Ausgleichswellleneinheit nach einem oder mehreren der vorhergehenden Ansprüche,
**dadurch gekennzeichnet,**
daß zwei Ausgleichswellen gegenläufig rotierend in vertikaler Richtung übereinanderliegend angeordnet sind.

7. Ausgleichswelleneinheit nach Anspruch 6,
**dadurch gekennzeichnet,**
daß nur der untenliegenden Ausgleichswelle zumindest eine Abstreifleiste (13) zugeordnet ist.

8. Ausgleichswelleneinheit nach Anspruch 6 oder 7,
**dadurch gekennzeichnet,**
daß beide Ausgleichswellen ein gemeinsames Gehäuse (12) aufweisen, welches die untenliegende Ausgleichswelle in einem Winkelbereich von etwa 180° umfaßt.

9. Ausgleichswelleneinheit nach einem oder mehreren der vorhergehenden Ansprüche,
**dadurch gekennzeichnet,**
daß das Gehäuse (12) einstückig mit einem Lagersteg (3) ausgebildet ist und im gegenüberliegenden Lagersteg (2) die Ausgleichswelle (1) oder die Ausgleichswellen in einem eingesetzten Lagerdeckel abgestützt sind.

10. Ausgleichswelleneinheit nach Anspruch 9,
**dadurch gekennzeichnet,**
daß dem Gehäuse (12) eine Ölpumpe zugeordnet ist, welche über den Antrieb der Ausgleichswelle (1) oder der Ausgleichswellen angetrieben wird.
